# EUROPEAN PATENT APPLICATION

(11) **EP 1 405 715 A1**
(43) Date of publication of application: **07.04.2004**
(21) Application number: 03020027.3
(22) Date of filing: 04.09.2003
(51) Int. Cl.: B29C 67/24, B29C 70/58, B32B 27/36, E04C 2/20, B29K 67/00

(54) **Method of making a sheet of building material**

(30) Priority: 02.10.2002 US 262853
(71) Applicant: Illinois Tool Works, Inc., Glenview, Cook County, Illinois 60025 (US)
(72) Inventor: Anderson, Robert Phillip, Westschester Ohio 45069 (US); Whitley, Kimberly Ann, Hamilton Ohio 45011 (US); Schaeffer, Louis Paul, Cincinnati Ohio 45212 (US)
(74) Representative: Vetter, Ewald Otto

(57) **Abstract**

A method of making a sheet of building material. The method includes: providing a molding surface; providing a composition comprising vinyl ester resin in combination with polyester resin, an optional monomer, a thickening agent, an accelerator, and a filler; depositing the composition on the molding surface; and curing the composition to form the sheet of building material. Another aspect of the invention is the sheet of building material. Another aspect of the invention is a method of making a laminate.

## Description

### CROSS-REFERENCE TO RELATED APPLICATIONS

The present application is a continuation-in-part application of application Serial No. 09/799,211 filed March 5, 2001, entitled "Wood Replacement System and Method."

### BACKGROUND OF THE INVENTION

This invention relates generally to building materials, and more particularly to methods of making a sheet of building material, to the sheet of building material produced, and to methods of making a laminate with the sheet of building material.

Building materials of various types are well-known. One common building material is wood. Wood is very versatile and can be used in many different applications. It is available in a wide range of shapes and sizes, and it can be easily cut and finished. However, there are some applications in which it is undesirable to use wood. In addition, wood can degrade over time upon exposure to environmental conditions, such as heat, sun, water, and humidity.

Laminates are another common building material. High pressure laminates are formed from paper sheets impregnated with thermoset resins. Typically, the core sheets are impregnated with phenolic resin, while the surface sheets are impregnated with melamine resin. High pressure laminates have been used in countertops, tabletops, wall coverings, and the like.

Laminate floors are gaining in popularity. They typically comprise three layers: an upper layer of wood or other material, a layer of pressboard, and a spongy bottom layer. However, pressboard will swell and delaminate if it gets wet. This problem could limit the use of laminate flooring in some applications.

Low pressure laminates are generally made of melamine impregnated facing sheets with a backing made of various materials. Low pressure laminates have been used for wall paneling and simulated wood in furniture. However, their physical properties are generally inferior to high pressure laminates.

Solid surfacing material, spray granite, and cultured marble are other popular types of building material. Such building materials are commonly used for countertops and sinks and the like in kitchens and bathrooms. Solid surfacing materials are typically thick slabs of thermoset acrylic or thermoset polyester resin with a variety of fillers. They can be made to simulate stone products such as granite and marble. Because solid surfacing materials are generally formed in thick slabs, the material costs are high based on the area covered. In addition, they are difficult to fabricate and install, which adds to the cost of the products. As a result, solid surfacing materials are expensive and can exceed the cost of the natural marble or granite.

Therefore, there remains a need for a versatile, lower cost building material which can be easily formed into various shapes, and which is strong and lightweight.

### SUMMARY OF THE INVENTION

The present invention meets this need by providing a method of making a sheet of building material. The method includes: providing a molding surface; providing a composition comprising vinyl ester resin in combination with polyester resin, an optional monomer, a thickening agent, an accelerator, and a filler; depositing the composition on the molding surface; and curing the composition to form the sheet of building material.

By "sheet," we mean flat thin sheets, thicker slabs (including sheets and slabs having projections, such as for the front or back edge of a countertop), and sheets formed into a shape, such as sinks and tubs.

In one embodiment, the molding surface can be a mold defining a mold cavity, and the mold can be a closed mold or an open mold.

The method may also include disposing a dam on the composition when the composition is partially cured, the dam being at a distance from the side wall of the mold so as to define a space therebetween, depositing a second portion of composition in the space, and curing the second portion of composition, whereby the sheet has a second thickness in the space and a first thickness outside the space, the second thickness being greater than the first thickness.

In another embodiment, the molding surface can be a continuous belt. The method can include positioning a blade over the belt at a selected height to produce a sheet having a selected thickness.

The method can include depositing a layer of high quality resin on the molding surface before depositing the composition.

When a fire-retardant sheet is desired, the vinyl ester resin or the polyester resin can be a fire-retardant resin. Alternatively, the filler can be a fire-retardant filler.

Another aspect of the invention is the sheet of building material made by the method.

In another aspect, the invention is a method of making a laminate. The method includes providing a sheet made from a composition comprising vinyl ester resin in combination with polyester resin, an optional monomer, a thickening agent, an accelerator, and a filler, the sheet having a first side and a second side; providing a second layer; and bonding the second layer to the first side of the sheet. A third layer can be bonded to the second side of the sheet, if desired. The bonding can be done using a method including, but not limited to, applying an adhesive, heating, chemical bonding, or combinations thereof.

### BRIEF DESCRIPTION OF THE DRAWINGS

Fig. 1 is a cross-section of one embodiment of a mold used in the process of the present invention.
Fig. 2 is a cross-section of another embodiment of a mold used in the process of the present invention.
Fig. 3 is a cross-section of another embodiment of process of making a sheet according to the present invention.
Fig. 4 is a cross-section of another embodiment of a mold used in the process of the present invention in the open position.
Fig. 5 is a cross-section of the mold of Fig. 4 in the closed position.
Fig. 6 is a cross-section of a laminate made according to present invention.

### DETAILED DESCRIPTION OF THE INVENTION

The method of the present invention uses a composition which includes a combination of polyester resin and vinyl ester resin. Typically, the composition includes between about 40 to about 60% by weight of the total composition of polyester resin and between about 10 to about 25% by weight of the total composition of vinyl ester resin. The vinyl ester resin is generally about 10 to about 20% by weight of the total composition.

The composition optionally includes a monomer in an amount of between 0 to about 20% by weight of the total composition. The monomer can be any suitable monomer, such as a styrene monomer. It is typically present in an amount of between about 5 to about 20% by weight of the total composition. If a low volatile organic compound (VOC) is desired, the styrene monomer can be used in amounts at the lower end of the range. Alternatively, a non-styrenic, VOC-compliant material can be used.

The composition includes a thickening agent, such as thixotropic clay. The thickening agent is generally present in an amount of between about 1 to about 15% by weight of the total composition.

The composition also includes one or more accelerators. The accelerators are generally present in an amount of between about 0.1 to about 5% by weight of the composition. Typical accelerators include, but are not limited to, dimethyl para-toluidine, dimethyl aniline, diethyl aniline (DEA), dimethyl acetalacetamide, cobalt octoate, potassium octoate, copper naphthanate, quaternary ammonium salts, or mixtures thereof.

The composition also includes one or more fillers, which are usually present in an amount of between about 1 to about 25% by weight of the total composition. Typical fillers include, but are not limited to, hollow spheres or microspheres, wollastonite fibers, mica, potassium aluminum silicate, calcium silicate, calcium sulfate, aluminum trihydrate, or combinations thereof.

The composition may optionally include fumed silica. The fumed silica is generally present in an amount of between 0 and about 3% by weight, typically between 0 and about 2% by weight of the total composition.

The composition can be made by mixing the polyester resin, vinyl ester resin, optional monomer, and thickening agent in a conventional mixer. The fumed silica, if present, can be added initially or after the first mixing step. The accelerators are added and mixed, typically for about 5 minutes. The fillers are then added and mixed into the composition for about 20 minutes to form the composition.

The composition can optionally be filtered through a mesh filter, if desired.

A catalyst can be added to the composition, either before final mixing or during spraying of the composition onto the molding surface. The catalyst can include, but is not limited to, methyl ethyl ketone peroxide, benzoyl peroxide, or cumyl hydroperoxide.

The composition is then ready for use in the method of the present invention.

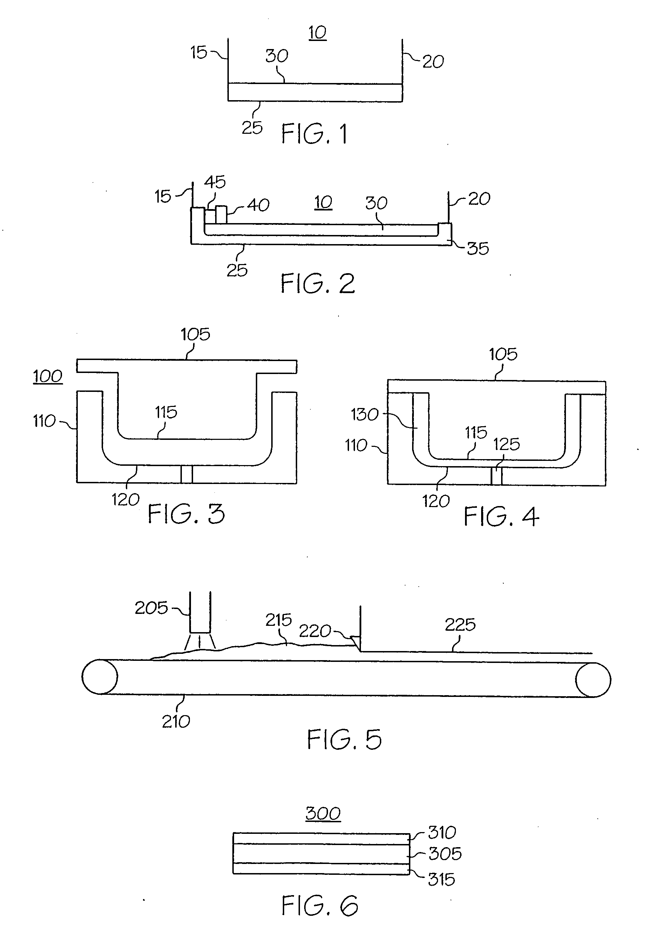

As shown in Fig. 1, a mold 10 is provided. The mold 10 has sidewalls 15 and 20 and bottom wall 25. The composition 30 is deposited on the bottom wall 25 of the mold 10. The composition 30 may be deposited by any suitable process including, but not limited to, pouring, pumping, injecting, spraying, or combinations thereof. When the composition is sprayed onto the molding surface, one or more thin layers may be sprayed to obtain the desired thickness. Each sprayed layer is typically in the range of about 1/8 to 1/4 of an inch thick.

The composition is then cured. The curing time depends on what composition is being used, and the shape and thickness of the sheet. Typically, curing takes place at ambient temperature in the mold. However, the mold can be heated to reduce curing time, if desired. Alternatively, the sheet can be removed from the mold after it is cured sufficiently to support itself, and then the curing can be finished outside the mold, either at ambient temperature or at elevated temperature.

In the embodiment shown in Fig. 2, a high quality surface, such as for example a countertop, can be made by depositing a layer of a high quality resin 35 onto the bottom wall 25 and the side walls 15 and 20. The high quality resin includes, but is not limited to, filled acrylic resins, such as polymethylmethacrylate, or a combination of polymethylmethacrylate and methyl methacrylate resins, or other suitable resins. The high quality resins are those known for their use in solid surfacing or similar materials. The term "acrylic resin" includes modified acrylic resins. After the high quality resin has been deposited and at least partially cured, a layer of the composition 30 of the present invention is deposited on the layer of high quality resin, and the material is cured. The resulting sheet is strong, light weight, and less expensive than one made from the high quality resin alone. This type of sheet is suitable for use as a countertop.

A dam 40 can be disposed on the partially cured composition at a distance away from the side wall 15 of the mold. A second portion 45 of the composition is then deposited into the space between the side wall 15 and the dam 40. The sheet is then cured. The cured sheet includes an integral projection near the edge of the sheet which is thicker than the remainder of the sheet. The projection is suitable for the front or back edge of a countertop.

When a sheet formed into a shape is desired, a closed mold injection molding process can be used, as shown in Figs. 3 and 4. Fig. 3 shows the open mold 100. There are two mold halves 105 and 110. Mold half 105 includes a mold surface 115, while mold half 110 includes mold surface 120. The mold is then closed as in Fig. 4, and the composition is injected through one or more openings 125 into the mold cavity 130 between mold surfaces 115 and 120. The sheet is then cured and removed from the mold. A high quality resin can be injected prior to the composition of the present invention in order to form a high quality surface on the shaped sheet.

Fig. 5 shows an alternate process for making a flat sheet. One or more nozzles 205 deposit the composition onto a continuous belt 210. The composition builds up to form a layer 215 on the continuous belt 210. A blade 220 is positioned at a selected distance above the continuous belt 210. As the layer 215 passes under the blade 220, a portion of the layer is removed, leaving a flat, smooth layer 225 of the selected height. The blade 220 can be adjusted to various heights to make layers of varying thicknesses. For thicker sheets, it may be necessary to use additional nozzles and additional blades to obtain the desired thickness. For example, a first blade could be used to make a smooth layer 1/4 inch thick. There could be an additional nozzle to deposit more composition and a second blade set to make a smooth layer 1/2 inch thick. Additional nozzles and blades could be used to obtain a sheet of the desired thickness. The sheet can be cut into the desired lengths using any suitable cutting apparatus, including but not limited to, a saw (not shown).

Prior to depositing the resin on the molding surface, a mold release material can be applied to the molding surface to allow easy removal of the sheet. Mold release materials are well known and can be applied using any suitable process, as is well-known in the art.

Sheets can be made in various shapes, such as rectangular, square, round, oval, etc. The sheet can be directly molded into the desired shape, or made in a continuous sheet and cut to form the shape. The sheets can be made in various sizes, either by molding or cutting to size, depending on the application. For example, 4' x 8' sheets can be made. The sheets can be made in different thicknesses. The sheets would typically be in the range of 1/4 inch to 1 1/2 inch or more, depending on the end use.

Some applications will require a fire-retardant sheet. For such applications, a fire-retardant resin can be used to make the fire-retardant sheet. Alternatively, a fire-retardant filler, such as calcium sulfate, alumina trihydrate, or similar fillers, can be used. The two approaches can be combined, if desired, and both a fire-retardant resin and a fire-retardant filler can be used. The sheets can be used for products including, but not limited to, countertops, sinks, tubs, shower surrounds, sills, thresholds, mantles, building panels, support layers in floor coverings, and the like.

The sheet can be used to make a laminate, as shown in Fig. 6. The laminate 300 includes the sheet 305, made according to the present invention. A second layer 310 is bonded to one side of the sheet. An optional third layer can be bonded to the other side of the sheet. Additional layers can be added, if desired. The layers are bonded using methods including, but not limited to, applying an adhesive, heating the layers, chemical bonding, or combinations thereof.

Laminates containing the sheet can be used to make a variety of products, including, but not limited to flooring, countertops, tabletops, wall coverings, and simulated wood furniture. Using a sheet made according to the present invention in the laminate provides a layer which will not be affected by water, and which is strong and lightweight.

As seen in Table 1, 3/8 inch sheets made according to the present invention, i.e. 3/8 sheet of Building Material, have improved strength and compression as compared to 3/8 inch sheets plywood and balsa wood. The sheet of building material of the present invention is also better at preventing water absorption. In addition, the sheet of building material of the present invention shows improved results in the fastener withdrawal test.

**TABLE 1**

| | 3/8 Balsa | 3/8 Plywood | 3/8 Sheet of Building Material |
|---|---|---|---|
| Shear Strength (psi) | 358 | 263 | 705 |
| Shear Modulus (psi) | 5347 | 6210 | 6538 |
| Flex Strength (psi) | 11025 | 7917 | 19427 |
| Flex Modulus (msi) | 1.03 | 0.97 | 0.88 |
| Tensile Strength (psi) | 10,091 | 9,019 | 7,191 |
| Tensile Modulus (msi) | .8 | 1.23 | .55 |
| Compressive Str. (psi) | 604 | 901 | 2544 |
| Compressive Mod. (psi) | 4739 | 8917 | 49645 |
| Fastener Withdrawal (lbs) | 290 | 294 | 371 |
| Water Absorption (%) | 4.7 | 15.3 | 0.2 |

While certain representative embodiments and details have been shown for purposes of illustrating the invention, it will be apparent to those skilled in the art that various changes in the compositions and methods disclosed herein may be made without departing from the scope of the invention, which is defined in the appended claims.

The features of the description, the claims and the drawings, single or in any combination, are patentable, as far as not excluded by the prior art. Each claim can depend on any one or more of the other claims.

## Claims

1. A method of making a sheet of building material comprising:
providing a molding surface;
providing a composition comprising vinyl ester resin in combination with polyester resin, an optional monomer, a thickening agent, an accelerator, and a filler;
depositing the composition on the molding surface; and
curing the composition to form the sheet of building material.

2. The method of claim 1 wherein the molding surface comprises a mold defining a mold cavity.

3. The method of claim 2 wherein the mold is a closed mold.

4. The method of claim 2 wherein the mold is an open mold.

5. The method of claim 2 wherein the mold cavity includes a bottom wall and a side wall.

6. The method of claim 5 further comprising: disposing a dam on the composition when the composition is partially cured, the dam being at a distance from the side wall of the mold cavity so as to define a space therebetween; depositing a second portion of composition in the space; and curing the second portion of composition, whereby the sheet of building material has a second thickness in the space and a first thickness outside the space, the second thickness being greater than the first thickness.

7. The method of claim 1 wherein the molding surface is a continuous belt and further comprising positioning a blade over the continuous belt at a selected height to produce the sheet having a selected thickness.

8. The method of claim 1 further comprising providing a mold release agent on the molding surface before the composition is deposited.

9. The method of claim 1 wherein the composition is deposited on the molding surface using a method selected from pouring, pumping, injecting, spraying, or combinations thereof.

10. The method of claim 1 further comprising heating the composition on the molding surface.

11. The method of claim 1 further comprising removing the sheet of building material from the molding surface and heating the sheet of building material.

12. The method of claim 1 further comprising adding a catalyst to the composition.

13. The method of claim 12 wherein the catalyst comprises methyl ethyl ketone peroxide, benzoyl peroxide, or cumyl hydroperoxide.

14. The method of claim 1 further comprising depositing a layer of high quality resin on the molding surface before depositing the composition.

15. The method of claim 14 wherein the high quality resin is an acrylic resin.

16. The method of claim 1 wherein the composition comprises:
about 10 to about 25% by weight of vinyl ester resin;
about 40 to about 60% by weight of polyester resin;
0 to about 20% by weight of monomer;
about 1 to about 15% by weight of thickening agent;
about 0.1 to about 5% by weight of accelerator; and
about 1 to about 25% by weight of filler.

17. The method of claim 16 wherein there is about 10 to about 20% by weight of vinyl ester resin.

18. The method of claim 16 wherein there is between about 5 to about 20% by weight monomer.

19. The method of claim 1 wherein the composition further comprises 0 to about 3% by weight fumed silica.

20. The method of claim 1 wherein the vinyl ester resin or the polyester resin is a fire-retardant resin.

21. The method of claim 1 wherein the filler is a fire-retardant filler.

22. The method of claim 21 wherein the fire-retardant filler is selected from calcium sulfate, alumina trihydrate, or combinations thereof.

23. The method of claim 1 wherein the accelerator is selected from dimethyl para-toluidine, dimethyl aniline, diethyl aniline, dimethyl acetalacetamide, cobalt octoate, potassium octoate, copper naphthanate, quaternary ammonium salts, or mixtures thereof.

24. The method of claim 1 wherein the filler is selected from hollow microspheres, wollastonite fibers, mica, potassium aluminum silicate, calcium silicate, calcium sulfate, aluminum trihydrate, or combinations thereof.

25. The method of claim 1 wherein the thickening agent is a thixotropic clay.

26. The method of claim 1 further comprising filtering the composition through a mesh filter before depositing it on the molding surface.

27. The sheet of building material made by the method of claim 1.

28. A method of making a laminate comprising:
providing a sheet made from a composition comprising vinyl ester resin in combination with polyester resin, an optional monomer, a thickening agent, an accelerator, and a filler, the sheet having a first side and a second side;
providing a second layer; and
bonding the second layer to the first side of the sheet.

29. The method of claim 28 further comprising providing a third layer and bonding the third layer to the second side of the sheet.

30. The method of claim 28 wherein bonding the second layer to the first side of the sheet comprises using a method selected from applying an adhesive, heating, chemical bonding, or combinations thereof.
